# EUROPÄISCHE PATENTSCHRIFT

(11) **EP 1 312 543 B1**
(45) Veröffentlichungstag und Bekanntmachung des Hinweises auf die Patenterteilung: **10.01.2007**
(21) Anmeldenummer: 02024657.5
(22) Anmeldetag: 05.11.2002
(51) Int. Cl.: B62K 25/28

(54) **Fahrradrahmen**
Bicycle frame
Cadre de bicyclette

(30) Priorität: 14.11.2001 DE 20118562 U
(43) Veröffentlichungstag der Anmeldung: 21.05.2003
(73) Patentinhaber: Canyon Bicycles GmbH, 56073 Koblenz (DE)
(72) Erfinder: Scheffer, Lutz, 75181 Pforzheim (DE); Arnold, Roman, 56068 Koblenz (DE)
(74) Vertreter: von Kirschbaum, Alexander

(56) Entgegenhaltungen:
- EP-A- 0 574 613
- EP-A- 0 769 447
- EP-A- 0 796 782
- GB-A- 2 352 212

## Beschreibung

Die Erfindung betrifft einen Fahrradrahmen, insbesondere einen Mountainbike-Rahmen.

Insbesondere hochwertige Mountainbike-Rahmen weisen keine starre Hinterradaufhängung, sondern eine Hinterradschwinge auf, sowie im Stand der Technik Dokument EP 0 796 782, das alle Merkmale des Oberbegriffs des Anspruchs 1 offenbart. Die Hinterradschwinge ist im Bereich des Tretlagers schwenkbar beispielsweise mit dem Sattelrohr verbunden. Die Hinterradschwinge weist eine von der Lagerung im wesentlichen horizontal verlaufende Gabel auf, die an ihrem Ende mit der Hinterradachse verbunden ist. Eine zweite im Querschnitt ebenfalls U-förmige Strebe führt von der Hinterradachse in Richtung des Bereichs des Sattelrohrs, an dem das Oberrohr befestigt ist. Um ein Bewegen der Hinterradschwinge um das Schwingenlager zu ermöglichen, sind die in Richtung des Oberrohrs weisenden Streben der Schwinge nicht starr mit dem Sattelrohr oder dem Oberrohr verbunden. Vielmehr ist zur Dämpfung und Federung der Schwingenbewegung zwischen diesen Schwingenstreben und dem Sattelrohr oder dem Oberrohr ein Dämpfungs- und Federelement angeordnet. Ggf. sind zwischen dem Dämpfungselement und den Schwingenstreben noch Umlenkhebel vorgesehen, um beispielsweise beim Einfedern der Schwinge auftretende Kräfte in Richtung des Dämpfungselementes umzulenken.

Um die beim Einfedern der Schwinge auftretenden Kräfte gut durch das Dämpfungselement aufnehmen zu können, ist das Dämpfungselement vorzugsweise im wesentlichen parallel zum Oberrohr des Fahrradrahmens angeordnet. Durch ein derart angeordnetes Dämpfungselement können die von den in Richtung des Oberrohrs weisenden Streben der Schwinge übertragenen Kräfte unmittelbar oder durch Zwischenschalten eines beispielsweise mit dem Sattelrohr verbundenen Hebelelements aufgenommen werden. Bei der Anordnung des Dämpfungselements im wesentlichen parallel zum Oberrohr des Rahmens muss das Dämpfungselement an dem Oberrohr befestigt werden. Hierzu ist es bekannt, an der Unterseite des Oberrohrs ein Befestigungselement, beispielsweise eine Lasche, anzuschweißen, an dem das Dämpfungselement beispielsweise durch eine Schraubenverbindung befestigt ist. Das Dämpfungselement stützt sich somit am Oberrohr ab. Die Krafteinleitung der beim Einfedern der Schwinge auf das Dämpfungselement übertragenen Kraft erfolgt somit über das an der Unterseite des Oberrohrs angeschweißte Befestigungselement in das Oberrohr. Hierbei treten erhebliche Zugspannungen und Momente in der Schweißnaht auf. Dies kann bei starken Belastungen zum Beschädigen oder gar zum Ausreißen der Schweißnaht zwischen dem Befestigungselement und dem Oberrohr führen. Um die Lebensdauer dieser Schweißnähte zu erhöhen, ist es erforderlich, äußerst massive Befestigungselemente an Oberrohren mit dickeren Rohrwänden zu befestigen. Dies hat allerdings den Nachteil, dass sich das Gewicht des Rahmens erhöht.

Aufgabe der Erfindung ist es, die Befestigung des Dämpfungselements am Oberrohr des Fahrradrahmens zu verbessern.

Die Lösung der Aufgabe erfolgt erfindungsgemäß durch die Merkmale des kennzeichnenden Teils des Anspruchs 1.

Erfindungsgemäß weist das Oberrohr zur Befestigung des Dämpfungselements eine Stufe auf. Durch die Stufe ist eine Stufenfläche ausgebildet, so dass die Krafteinleitung von dem Dämpfungselement in das Oberrohr über die Stufenfläche erfolgt. Die Krafteinleitung erfolgt somit zumindest teilweise in Längsrichtung des Oberrohrs. Da die Stufenfläche vorzugsweise in Richtung der Hinterradschwinge weist, wird zumindest ein Teil der zu übertragenen Kräfte als Druckkräfte auf die Stufenfläche übertragen. Hierbei weist die Stufenfläche zur Längsrichtung des Gabelrohrs einen Winkel von 90° oder weniger auf. Vorzugsweise ist die Stufenfläche in Richtung des Gabelrohrs des Fahrradrahmens geneigt, wobei der Winkel zwischen der Längsachse des Oberrohrs und der Stufenfläche vorzugsweise 40-60° beträgt.

Durch das erfindungsgemäße Vorsehen einer Stufe in dem Oberrohr und einer Befestigung des Dämpfungselements über diese Stufe können die von dem Dämpfungselement an das Oberrohr zu übertragenden Kräfte erheblich besser in das Oberrohr eingeleitet werden. Insbesondere treten in Schweißnähten, mit denen beispielsweise ein das Dämpfungselement tragendes Befestigungselement an dem Oberrohr befestigt ist, erheblich geringe Zugspannungen und Momente auf. Dies hat zur Folge, dass die Gefahr eines Beschädigens der Schweißnaht erheblich verringert ist.

Zur Ausbildung der Stufenfläche kann das Oberrohr zweifach abgewinkelt sein. Das Oberrohr verläuft hierbei von dem Sattelrohr im wesentlichen horizontal in Richtung des Gabelrohrs, ist sodann ein erstes Mal in Richtung des unteren Rahmenrohrs abgewinkelt und verläuft sodann nach einem zweiten Abwinkeln wieder in Richtung des Gabelrohrs. Der Verlauf des Oberrohrs ist somit im wesentlichen S-förmig. Hierbei bildet der Bereich zwischen den beiden Abwinklungen die Stufenfläche, an der das Dämpfungselement ggf. über ein Befestigungselement befestigt ist.

Vorzugsweise ist die Stufe des Oberrohrs dadurch gebildet, dass das Oberrohr ein vorderes und ein hinteres Rohrteil aufweist. Die beiden Rohrteile weisen einen unterschiedlichen Querschnitt auf, wobei der Querschnitt des vorderen Rohrteils zumindest im Bereich der Stufe größer als der Querschnitt des hinteren Rohrteils ist. Aufgrund dieser sprunghaften Querschnittsveränderung ist eine Stufe im Oberrohr ausgebildet. Vorzugsweise handelt es sich bei den beiden Rohrteilen um zwei Einzelteile, die miteinander verschweißt sind. Dies hat den Vorteil, dass die beiden Teile einfacher hergestellt werden können und beim Verschweißen der beiden Rohrteile gleichzeitig ein Befestigungselement für das Dämpfungselement mit den beiden Oberrohrteilen verbunden werden kann. Hierbei ist das Befestigungselement vorzugsweise mit der Stufenfläche verbunden oder bildet die Stufenfläche. Insbesondere ist das Befestigungselement beispielsweise keilförmig ausgebildet, so dass das Befestigungselement zumindest teilweise zwischen dem vorderen und dem hinteren Rohrteil angeordnet ist. Vorzugsweise erstreckt sich das Befestigungselement jeweils über den gesamten Querschnitt der beiden Rohrteile, so dass das hintere Rohrteil mit einer Seite des Befestigungselements und das vordere Rohrteil mit einer weitern Seite des Befestigungselements verschweißt werden kann.

Die Stufenfläche ist vorzugsweise derart ausgebildet, dass eine Längsachse des Dämpfungselements bzw. der Befestigungspunkt des Dämpfungselements über den die Kraft in das Oberrohr eingeleitet wird, nur geringfügig außerhalb der Stufenfläche verläuft bzw. liegt. Vorzugsweise ist der Abstand zwischen der Längsachse bzw. dem Befestigungspunkt des Dämpfungselements bei einer Betrachtung in Längsrichtung des Oberrohrs geringer als 20 mm insbesondere geringer als 10 mm. Besonders bevorzugt ist es, wenn die Längsachse bzw. der Befestigungspunkt in ihrer Projektion in Längsrichtung des Oberrohrs innerhalb der Stufenfläche angeordnet ist.

Nachfolgend wird die Erfindung anhand bevorzugter Ausführungsformen näher erläutert.

Es zeigen:
- Fig. 1: eine schematische Seitenansicht einer ersten bevorzugten Ausführungsform des Fahrradrahmens,
- Fig. 2: eine schematische Seitenansicht einer zweiten bevorzugten Ausführungsform des Fahrradrahmens und
- Fig. 3: eine schematische Schnittansicht entlang der Linie III-III in Fig. 1.

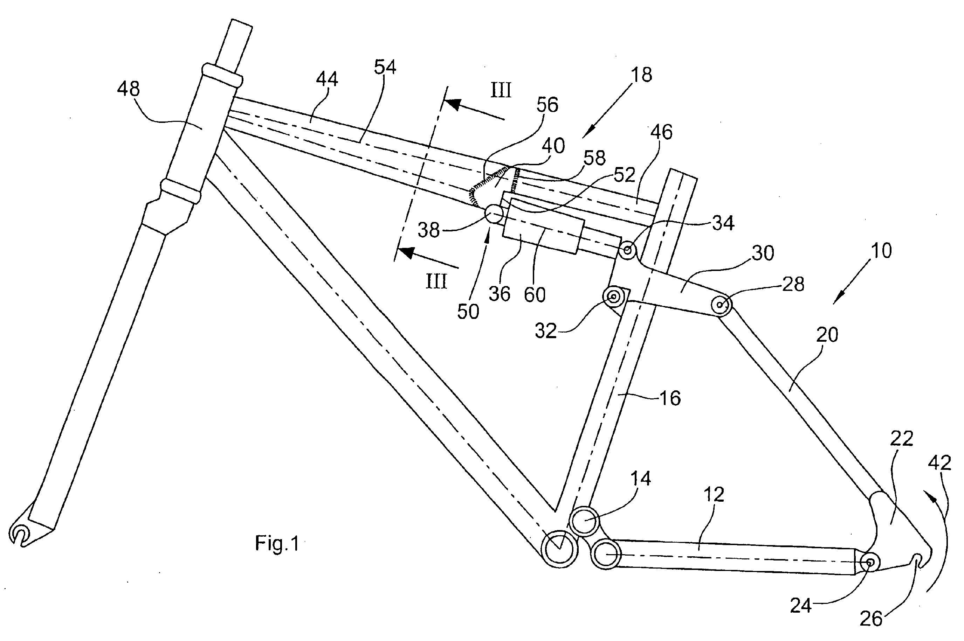

Der erfindungsgemäße Fahrradrahmen weist eine Hinterradschwinge 10 auf. Ein unterer gabelförmiger Schwingenteil 12 der Schwinge 10 ist über ein Schwingenlager 14 schwenkbar mit einem Sattelrohr 16 des Fahrradrahmens verbunden. In Richtung eines Oberrohrs 18 verlaufende Streben 20 sind jeweils über ein Auslaufende 22 mit dem gabelförmigen Teil 12 verbunden. Es handelt sich hierbei um eine gelenkige Verbindung mittels eines Gelenks 24. Die beiden in Fig. 1 hintereinander angeordneten Auslaufenden 22 weisen eine Ausnehmung 26 zur Aufnahme der Hinterradachse auf.

Die beiden in Fig. 1 oberen Enden der beiden in der Figur hintereinander angeordneten Streben 20 sind über ein Gelenk 28 mit einem Hebel 30 verbunden. Der Hebel 30 ist über ein Gelenk 32 an dem Sattelrohr 60 drehbar gehalten.

Über ein drittes Gelenk 34 des Hebels 30 ist der Hebel 30 mit einem Dämpfungsund oder Federelement 36 verbunden.

Das Dämpfungselement 36 ist über ein weiteres Gelenk 38 über ein Befestigungselement 40 mit dem Oberrohr 18 verbunden. Ein Bewegen der Hinterradschwinge 10 beispielsweise in Richtung eines Pfeils 42 bewirkt über ein Kippen des Hebels 30 ein Zusammendrücken des Dämpfungselementes 36.

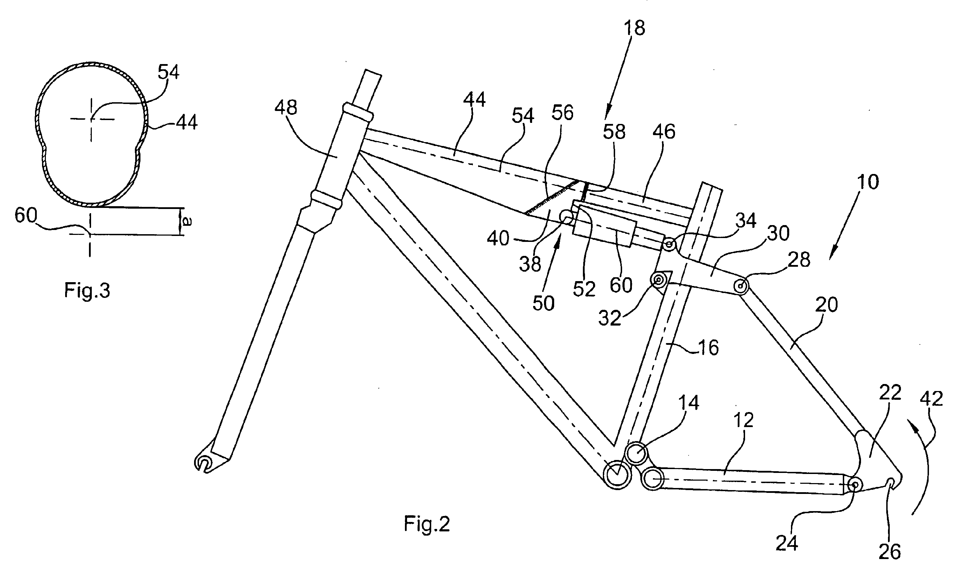

Das Oberrohr 18 ist bei den dargestellten bevorzugten Ausführungsformen der Erfindung zweiteilig und besteht aus einem vorderen Rohrteil 44 und einem hinteren Rohrteil 46. Das hintere Rohrteil 46 ist mit dem Sattelrohr und das vordere Rohrteil 44 mit einem Gabelrohr 48 verschweißt. Zwischen den beiden Rohrteilen 44, 46 ist das im Längsschnitt im wesentlichen dreieckige Befestigungselement 40 (Fig. 1 und 2) angeordnet. Durch das Befestigungselement 40 ist eine Stufe 50 zwischen den beiden Rohrteilen 44, 46 ausgebildet. Das Befestigungselement weist an der Stufe 50, d.h. der sprunghaften Querschnittsvergrößerung zwischen den beiden Rohrteilen 44, 46 eine Stufenfläche 52 auf. Beispielsweise über eine Schraube oder eine andere gelenkige Verbindung 38 ist das Dämpfungselement 36 mit dem Befestigungselement 40 im Bereich der Stufenfläche 52 befestigt. Die Stufenfläche 52 ist im dargestellten Ausführungsbeispiel im wesentlichen parallel zum Sattelrohr 16. Die Stufenfläche 52 kann jedoch auch in Richtung des Gabelrohrs 48 geneigt sein, so dass zwischen einer Längsachse 54 des Oberrohrs und der Stufenfläche 52 ein Winkel von weniger als 90°, vorzugsweise im Bereich von 40-60° entsteht.

Durch die Einleitung der beim Einfedern der Hinterradschwinge 10 über das Dämpfungselement 36 auf das Oberrohr 18 bzw. den vorderen Teil 54 des Oberrohrs 18 übertragenen Kräfte über die Stufenfläche 52 treten in den Schweißnähten 56, 58 im wesentlichen nur Zug- und Druckkräfte auf. Das Auftreten von Momenten in den Schweißnähten 56, 58, die zur Verbindung des Befestigungselements 40 mit dem vorderen und hinterem Rohrteil 44 bzw. 46 dienen, ist gegenüber bekannten Befestigungen eines Dämpfungselements am Oberrohr erheblich verringert. Dies ist insbesondere dadurch erreicht, dass eine Längsachse 60 des Dämpfungselements 36 in deren Richtung auch die Kraft auf das Befestigungselement 40 übertragen wird, einen möglichst geringen Abstand zu der Stufenfläche 52 aufweist. Dies ist beispielsweise auch aus Fig. 3 ersichtlich, da die in der Längsachse 60 des Dämpfungselements 36 nur geringfügig außerhalb des vorderen Rohrteils 44 angeordnet ist. Der Abstand a zur Unterkante des vorderen Rohrteils ist vorzugsweise kleiner als 20 mm, insbesondere kleiner als 10 mm. Der Abstand a entspricht dem Abstand der Längsachse 60 zu der Stufenfläche 52, wobei der Abstand zur Verdeutlichung in Fig. 3 dargestellt wurde. Besonders bevorzugt ist es, wenn die Längsachse 60 innerhalb der Stufenfläche 52 verläuft. Bezogen auf Fig. 3 bedeutet dies, dass die Längsachse 60 vorzugsweise weiter nach oben in Richtung der Längsachse 54 verschoben wird oder der Querschnitt des vorderen Rohrteils entsprechend vergrößert wird, so dass die Längsachse 54 innerhalb des Rohrquerschnitts liegt.

Ein derartiges Ausführungsbeispiel, bei dem die Längsachse 60 innerhalb der Stufenfläche 52 liegt, ist in Fig. 2 dargestellt. Hierbei ist in Fig. 2 die Querschnittsfläche des vorderen Rohrteils 44 vergrößert.

In den beiden dargestellten Ausführungsformen verjüngt sich das vordere Rohrteil 44 in Richtung des Gabelrohrs 48. Hierdurch ist es möglich, das Oberrohr 18 ohne Veränderung des Gabelrohrs 48 an diesem zu befestigen.

## Patentansprüche

1. Fahrradrahmen, insbesondere Mountainbike-Rahmen, mit
einer Hinterradschwinge (10),
einem Oberrohr (18) und
einem mit der Hinterradschwinge (10) verbundenen Dämpfungselement (36), das am Oberrohr (18) abgestützt ist,
**dadurch gekennzeichnet, dass**
das Oberrohr (18) zur Befestigung des Dämpfungselements (36) eine Stufe (50) aufweist, so dass die Krafteinleitung in das Oberrohr (18) im wesentlichen über eine Stufenfläche (52) erfolgt.

2. Fahrradrahmen nach Anspruch 1, **dadurch gekennzeichnet, dass** die Längsachse (60) des Dämpfungselements (36) weniger als 20 mm, insbesondere weniger als 10 mm außerhalb der Stufenfläche (52) verläuft.

3. Fahrradrahmen nach Anspruch 1, **dadurch gekennzeichnet, dass** die Längsachse (60) des Dämpfungselements (36) innerhalb der Stufenfläche (52) verläuft.

4. Fahrradrahmen nach einem der Ansprüche 1 bis 3, **dadurch gekennzeichnet, dass** sich das Oberrohr (18) von der Stufe (50) in Richtung eines Gabelrohrs (48) verjüngt.

5. Fahrradrahmen nach einem der Ansprüche 1 bis 4, **dadurch gekennzeichnet, dass** das Oberrohr (18) ein vorderes Rohrteil (44) und ein hinteres Rohrteil (46) aufweist, die an der Stufe (50) miteinander verbunden sind.

6. Fahrradrahmen nach einem der Ansprüche 1 bis 5, **dadurch gekennzeichnet, dass** die Stufenfläche (52) an einem mit dem Dämpfungselement (36) und dem Oberrohr (18) verbundenen Befestigungselement (40) vorgesehen ist.

7. Fahrradrahmen nach Anspruch 6, **dadurch gekennzeichnet, dass** das Befestigungselement (40) zumindest teilweise zwischen das vordere und das hintere Rohrteil (44, 46) ragt.

8. Fahrradrahmen nach Anspruch 6 oder 7, **dadurch gekennzeichnet, dass** das Befestigungselement (40) im Längsschnitt im wesentlichen dreieckig ist.

9. Fahrradrahmen nach einem der Ansprüche 1 bis 8, **dadurch gekennzeichnet, dass** die Stufenfläche (52) in Richtung des Gabelrohrs (48) geneigt ist.

## Claims

1. A bicycle frame, particularly a mountain bike frame, comprising:
a rear swinging fork (10),
a top tube (18) and
a damping element (36) connected to the rear swinging fork (10) and supported at the top tube (18),
**characterized in**
**that** the top tube (18) comprises a stepped portion (50) for attachment of the damping element (36) in such a manner that the force transmission into the top tube (18) is performed substantially via a step surface (52).

2. The bicycle frame according to claim 1, **characterized in that** the longitudinal axis (60) of the damping element (36) extends by less than 20 mm, particularly less than 10 mm, outside said step surface (52).

3. The bicycle frame according to claim 1, **characterized in that** the longitudinal axis (60) of the damping element (36) extends within said step surface (52).

4. The bicycle frame according to any one of claims 1 to 3, **characterized in that** the top tube (18) is formed to taper from said stepped portion (50) in the direction towards a steertube (48).

5. The bicycle frame according to any one of claims 1 to 4, **characterized in that** the top tube (18) comprises a front tube portion (44) and a rear tube portion (46) connected to each other at said stepped portion (50).

6. The bicycle frame according to any one of claims 1 to 5, **characterized in that** said step surface (52) is provided at an attachment element (40) connected to the damping element (36) and the top tube (18).

7. The bicycle frame according to claim 6, **characterized in that** the attachment element (40) is arranged to project at least partly between the front and rear tube portions (44,46).

8. The bicycle frame according to claim 6 or 7, **characterized in that** the attachment element (40) has a substantially triangular shape when viewed in longitudinal section.

9. The bicycle frame according to any one of claims 1 to 8, **characterized in that** said step surface (52) is inclined to extend in the direction towards the steertube (48).

## Revendications

1. Cadre de bicyclette, en particulier cadre de vélo tout terrain, comportant une fourche oscillante arrière (10), un tube supérieur (18) et un élément amortisseur (36) relié à la fourche oscillante arrière (10) et en appui contre le tube supérieur (18), **caractérisé en ce que** le tube supérieur (18) présente un gradin (50) pour la fixation de l'élément amortisseur (36), de telle sorte que l'introduction de la force dans le tube supérieur (18) se fait sensiblement par l'intermédiaire d'une surface de gradin (52).

2. Cadre de bicyclette selon la revendication 1, **caractérisé en ce que** l'axe longitudinal (60) de l'élément amortisseur (36) passe à moins de 20 mm, en particulier à moins de 10 mm à l'extérieur de la surface de gradin (52).

3. Cadre de bicyclette selon la revendication 1, **caractérisé en ce que** l'axe longitudinal (60) de l'élément amortisseur (36) passe à l'intérieur de la surface de gradin (52).

4. Cadre de bicyclette selon l'une des revendications 1 à 3, **caractérisé en ce que** le tube supérieur (18) se rétrécit à partir du gradin (50) en direction d'un tube de fourche (48).

5. Cadre de bicyclette selon l'une des revendications 1 à 4, **caractérisé en ce que** le tube supérieur (18) présente un segment de tube avant (44) et un segment de tube arrière (46) qui sont assemblés l'un à l'autre au niveau du gradin (50).

6. Cadre_de bicyclette selon l'une des revendications 1 à 5, **caractérisé en ce que** la surface de gradin (52) est prévue sur un élément de fixation (40) relié à l'élément amortisseur (36) et au tube supérieur (18).

7. Cadre de bicyclette selon la revendication 6, **caractérisé en ce que** l'élément de fixation (40) dépasse au moins en partie entre le segment de tube avant et le segment de tube arrière (44, 46).

8. Cadre de bicyclette selon la revendication 6 ou 7, **caractérisé en ce que** l'élément de fixation (40) est sensiblement triangulaire en coupe longitudinale.

9. Cadre de bicyclette selon l'une des revendications 1 à 8, **caractérisé en ce que** la surface de gradin (52) est inclinée en direction du tube de fourche (48).
